# EUROPEAN PATENT SPECIFICATION

(11) **EP 3 108 778 B1**
(45) Date of publication and mention of the grant of the patent: **03.11.2021**
(21) Application number: 16176108.5
(22) Date of filing: 24.06.2016
(51) Int. Cl.: A47J 31/56

(54) **BEVERAGE DISPENSER**
GETRÄNKESPENDER
DISTRIBUTEUR DE BOISSONS

(30) Priority: 26.06.2015 CN 201510362282
(43) Date of publication of application: 28.12.2016
(73) Proprietor: BSH Hausgeräte GmbH, 81739 München (DE)
(72) Inventor: Lu, Peng, 210046 Nanjing (CN); Pan, Zhiwei, 210046 Nanjing (CN); Xiong, Yingjie, 210046 Nanjing (CN)

(56) References cited:
- EP-A1- 2 462 850
- GB-A- 2 140 286
- None

## Description

The present invention relates to a beverage dispenser, and particularly to a water volume detection device of a beverage dispenser, mainly applied to coffee machines, juicers and the like.

The water tank of the existing beverage dispenser is provided with a water volume detection device, used for reminding users to add water, to prevent continuous heating after water is used up. Mainly by disposing a float in the water tank and disposing a float position sensor on the dispenser body, position information of the float is detected. Specifically, when the water level in the water tank reaches a predetermined height, the height of the float changes accordingly, the float position sensor disposed outside the water tank can detect corresponding information, and thus the water level in the water tank can be monitored, so as to control the beverage dispenser and/or send a prompt when the water level in the water tank is lower than or higher than a predetermined value.

However, the above parts such as the float and the position sensing device have a higher cost, and magnetic elements in the float are easily affected by environments, thus affecting precision of the beverage dispenser during operation.

Document EP2462850A1 discloses a beverage preparation machine having a tank, said tank comprising: a reservoir body with side, bottom and top walls, at least one filling opening, at least one dispensing opening comprising a dispensing valve for establishing a fluid connecting between said machine and said tank. Said valve being reciprocally movable between a first position where the valve is open and a second position where the valve is closed by spring. Additionally said machine comprises a switch disposed in the vicinity of at least one wall of the tank, so that: - when the tank is in a first position (contains sufficient water) so that it contacts said switch, and - when the tank is in a second position (the tank is almost empty), is away from said switch. Further said machine comprising a user warning means that is actuated when the switch does not contact the tank wall so as to warn the user that the tank needs a refill.

Document GB2140286A discloses a beverage preparation machine comprising a water tank. The machine comprises a switch and a spring-mounted pivot lever mechanism which is linked between the tank and the switch. When the tank contains sufficient water, the tank presses onto one end of the sprung lever mechanism, and the opposite end of the lever presses onto the switch. When the tank is empty, or at least does not contain sufficient water, it is sufficiently light to be lifted by the sprung lever mechanism, and the lever end in contact with the switch is moved away from said switch so that the machine sends a signal to the user of the machine, for warning the user that a tank refill is needed.

Therefore, an effective solution has not yet been put forward at present with respect to the problem in the prior art that the water volume detection device of the beverage dispenser has a high cost and is easily affected by environments.

The present invention provides a beverage dispenser, to at least solve the problem in the prior art that the water volume detection device of the beverage dispenser has a high cost and is easily affected by environments.

To achieve the objective, in one aspect of the present invention, a beverage dispenser is provided.

A beverage dispenser according to the present invention includes a dispenser body, a water tank, a control device used for controlling the beverage dispenser to operate and a water volume detection device, the water volume detection device including: a substrate located on the dispenser body; a mobile plate that supports the water tank; an elastic element disposed between the substrate and the mobile plate; a first contact member disposed below the mobile plate; and a second contact member disposed above the substrate; wherein the mobile plate is disposed above the substrate and moves up and down relative to the substrate with changes of water levels in the water tank, and the first contact member and the second contact member constitute a switch of the control device. When the water volume reaches a set value, the mobile plate, under the gravity of the water tank, is pressed to a lower side, and at this point, the first contact member comes into contact with the second contact member, and the control device starts to operate. When the water volume does not reach the set value, the mobile plate, under the action of the elastic element, is pushed to an upper side, and at this point, the first contact member does not contact the second contact member, and the control device stops operating. The weight of the water tank and the coefficient of the elastic element determine displacement of the mobile plate; as the coefficient of the elastic element is definite, when the water volume changes, the displacement of the mobile plate may change correspondingly, and the values can be set through calculation.

Preferably, when the first contact member comes into contact with the second contact member, the control device begins to operate; and when the first contact member is detached from the second contact member, the control device stops operating. The control device includes a control circuit connected with the first contact member and the second contact member, to form a complete circuit, and when the first contact member comes into contact with or is detached from the second contact member, the corresponding control circuit is turned on or off.

Preferably, the first contact member is a conducting strip integrally formed with the mobile plate, and the second contact member is a conductive element extending towards the direction of the mobile plate. The first contact member is set as a conducting strip, which can be integrally casted with the mobile plate, thus saving the space. The second contact member is set as a conductive element extending towards the direction of the mobile plate, used for communicating with the first contact member when the mobile plate moves down.

Preferably, the second contact member is a cylindrical object or bendable sheet metal.

Preferably, the second contact member is a conducting strip integrally formed with the substrate, and the first contact member is a conductive element extending towards the direction of the substrate. The second contact member is set as a conducting strip, which can be integrally casted with the substrate, thus saving the space. The first contact member is set as a conductive element extending towards the direction of the substrate, used for communicating with the second contact member when the mobile plate moves down. Preferably, the first contact member is a cylindrical object or bendable sheet metal.

According to the invention, the water volume detection device is disposed on a side face of the dispenser body. The water volume detection device causes the displacement of the mobile plate to change mainly by detecting the change of the gravity of the water tank, and thus the water volume detection device can achieve a detection function by being disposed at the bottom of the dispenser body or on a side face of the dispenser body. Especially when the water volume detection device is disposed on the side face of the dispenser body, the control circuit is not easily affected by steam and is much closer to a control device generally disposed on an upper portion of the dispenser body.

According to the invention, a side face of the dispenser body is provided thereon with a support device connected with the water tank, wherein the support device is provided thereon with a hole slot matching the water tank and the elastic element. The side face of the dispenser body is provided with a support device, used for sharing the gravity of the water tank, to maintain sensitivity of the water volume detection device. A hole slot is disposed on the support device to match a hasp on the water tank, used for fixing installation of the water tank, which can ensure that the water volume detection device can be in a position of normal operation; meanwhile, an elastic element is disposed, to enable the water tank to displace with the change of the water volume in a state of being supported, to cooperate with the operation of the water volume detection device.

According to the invention, the side face of the dispenser body is provided thereon with at least one support device, wherein the water volume detection device is disposed on one support device therein. When the water volume detection device is disposed on the side face of the dispenser body, it is feasible to dispose it on the support device, which can ensure fixing of the water tank and can also achieve water volume detection. This depends upon the design of the weight of the water tank, and the number of the support device may be two or three, one of which is provided with the water volume measuring device, and the other two are used for fixing and sharing the gravity of the water tank, which can more ensure accuracy of water volume measurement.

Preferably, the substrate is provided thereon with a connecting pole penetrating the mobile plate. By disposing the connecting pole, the displacement of the mobile plate relative to movement of the substrate is more stable, to ensure that relative change with the water volume is more accurate.

Preferably, the elastic element is a spring or an elastic washer.

Preferably, the beverage dispenser further includes an alarm prompt device connected with the water volume detection device, which is disposed on the dispenser body and mainly includes a sounding device and a prompt device, used for prompting users a normal water volume state and a state of needing water of the beverage dispenser.

Through the present invention, the problem in the prior art that the water volume detection device of the beverage dispenser has a high cost and is easily affected by environments, which, on the one end, reduces the manufacturing cost of the water volume detection device in the beverage dispenser, and on the other hand, causes water volume detection not to be easily affected by environments and to be more stable and accurate.

The drawings described herein are used to provide a further understanding for the present invention and constitute a part of the present application, schematic embodiments of the present invention and description thereof are used to explain the present invention and do not pose improper limitations to the present invention, and wherein:
- FIG. 1: is a schematic structural diagram of a beverage dispenser;
- FIG. 2: is a schematic diagram of an installation surface of the water tank and the dispenser body in FIG. 1;
- FIG. 3: is an enlarged schematic diagram of the A region in FIG. 1;
- FIG. 4: is another schematic structural diagram of the water volume detection device; and
- FIG. 5: is another schematic position diagram of the water volume detection device which is not covered by the present claims.

The present invention is described hereinafter in detail with reference to the accompanying drawings and in combination with embodiments. It should be noted that, without a conflict, embodiments in the present application and features in the embodiment can be combined with each other.

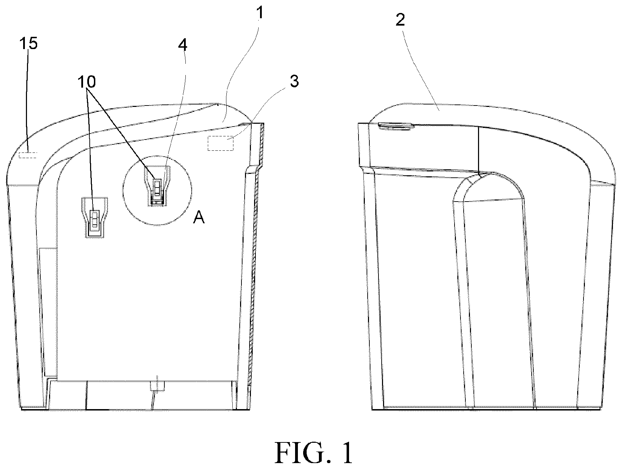

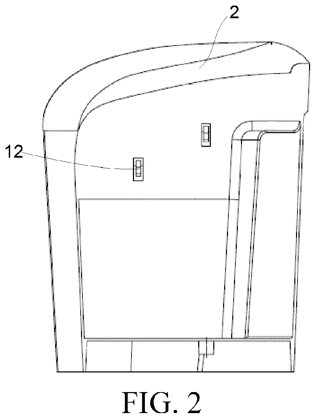

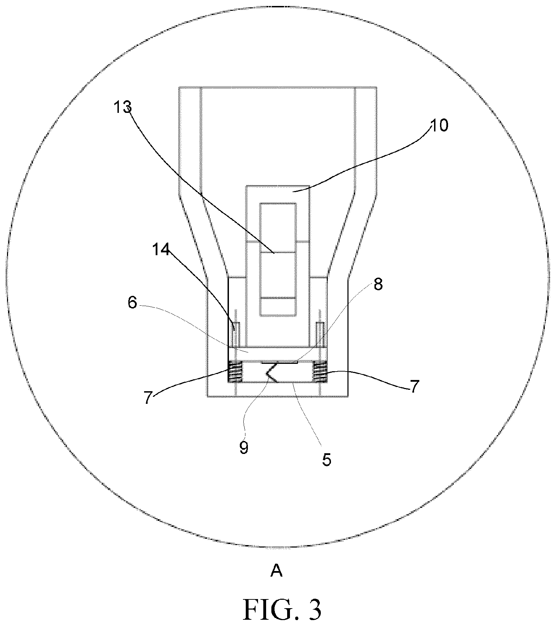

In this embodiment, a beverage dispenser is provided; FIG. 1 is a schematic structural diagram of the beverage dispenser, and FIG. 2 is a schematic diagram of an installation surface of the water tank and the dispenser body in FIG. 1; FIG. 3 is an enlarged schematic diagram of the A region in FIG. 1, as shown in FIG. 1, FIG. 2 and FIG. 3:
the beverage dispenser includes a dispenser body 1, a water tank 2, a control device 3 used for controlling the beverage dispenser to operate and a water volume detection device 4, the water volume detection device 4 including: a substrate 5 located on the dispenser body; a mobile plate 6 that supports the water tank; an elastic element 7 disposed between the substrate 5 and the mobile plate 6; a first contact member 8 disposed below the mobile plate 6; and a second contact member 9 disposed above the substrate 5; wherein the mobile plate 6 is disposed above the substrate 5 and moves up and down relative to the substrate 5 with changes of water levels in the water tank 2, and the first contact member 8 and the second contact member 9 constitute a switch of the control device.

When the water volume reaches a set value, the mobile plate 6, under the gravity of the water tank, is pressed to a lower side, and at this point, the first contact member 8 comes into contact with the second contact member 9, and the control device 3 starts to operate. When the water volume does not reach the set value, the mobile plate 6, under the action of the elastic element 7, is pushed to an upper side, and at this point, the first contact member 8 does not contact the second contact member 8, and the control device 3 stops operating. The weight of the water tank and the coefficient of the elastic element determine displacement of the mobile plate; as the coefficient of the elastic element is definite, when the water volume changes, the displacement of the mobile plate may change correspondingly, and the values can be set through calculation.

Preferably, when the first contact member 8 comes into contact with the second contact member 9, the control device 3 begins to operate; and when the first contact member 8 is detached from the second contact member 9, the control device 3 stops operating. The control device 3 includes a control circuit connected with the first contact member 8 and the second contact member 9, to form a complete circuit, and when the first contact member 8 comes into contact with or is detached from the second contact member 9, the corresponding control circuit is turned on or off.

Preferably, as shown in FIG. 3, the first contact member 8 is a conducting strip integrally formed with the mobile plate 6, and the second contact member 9 is a conductive element extending towards the direction of the mobile plate 6. The first contact member 8 is set as a conducting strip, which can be integrally casted with the mobile plate 6, thus saving the space. The second contact member 9 is set as a conductive element extending towards the direction of the mobile plate 6, used for communicating with the first contact member 8 when the mobile plate 6 moves down.

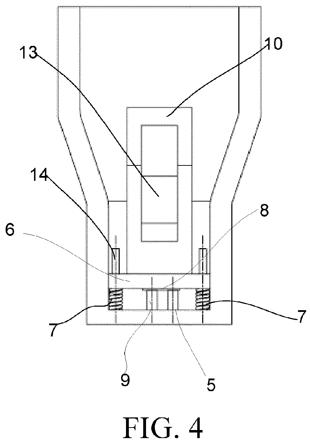

Preferably, as shown in FIG. 3, the second contact member 9 in the above structure is bendable sheet metal. FIG. 4 is another schematic structural diagram of the water volume detection device; as shown in FIG. 4, the second contact member 9 is a cylindrical object. The design of the water volume detection device can be flexibly selected according to a specific structure.

Preferably, in an embodiment not shown in other figures, the second contact member 9 is a conducting strip integrally formed with the substrate 5, and the first contact member 8 is a conductive element extending towards the direction of the substrate 5. The second contact member 9 is set as a conducting strip, which can be integrally casted with the substrate 5, thus saving the space. The first contact member 8 is set as a conductive element extending towards the direction of the substrate 5, used for communicating with the second contact member 9 when the mobile plate 6 moves down.

Preferably, the first contact member 9 is a cylindrical object or bendable sheet metal.

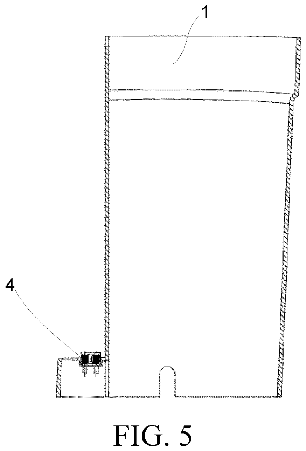

According to the invention, the water volume detection device 4 is disposed on a side face of the dispenser body 1. The water volume detection device 4 causes the displacement of the mobile plate to change mainly by detecting the change of the gravity of the water tank, and thus the water volume detection device 4 can achieve a detection function by being disposed at the bottom of the dispenser body or on a side face of the dispenser body. FIG. 5 is another schematic position diagram of the water volume detection device which is not covered by the present claims; as shown in FIG. 5, the water volume detection device 4 is disposed at the bottom of the dispenser body. As shown in FIG. 1, when the water volume detection device 4 is disposed on the side face of the dispenser body, the circuit system is not easily affected by steam and is much closer to a control device generally disposed on an upper portion of the dispenser body.

Preferably, as shown in FIG. 1, FIG. 2 and FIG. 3, a side face of the dispenser body 1 is provided thereon with a support device 10 connected with the water tank 2, wherein the support device 10 is provided thereon with a hole slot 13 matching the water tank 2 and the elastic element 7. The side face of the dispenser body 1 is provided with a support device 10, used for sharing the gravity of the water tank, to maintain sensitivity of the water volume detection device 4. A hole slot 13 is disposed on the support device 10 to match a hasp 12 on the water tank 2, used for fixing installation of the water tank 2, which can ensure that the water volume detection device 4 can be in a position of normal operation. Meanwhile, an elastic element 7 is disposed, to enable the water tank 2 to displace with the change of the water volume in a state of being supported, to cooperate with the operation of the water volume detection device 4.

Preferably, as shown in FIG. 1, the side face of the dispenser body 1 is provided thereon with at least one support device 10, wherein the water volume detection device 4 is disposed on one support device 10 therein. When the water volume detection device 4 is disposed on the side face of the dispenser body 1, it is feasible to dispose it on the support device 10, which can ensure fixing of the water tank 2 and can also achieve water volume detection. This depends upon the design of the weight of the water tank 2, and the number of the support device 10 may be two or three, one of which is provided with the water volume measuring device 4, and the other two are used for fixing and sharing the gravity of the water tank, which can more ensure accuracy of water volume measurement. It is relatively convenient that the first contact member 8 and the second contact member 9 in the water volume measuring device 4 can be removed, to form a support device 10 having an elastic element 7 and a hole slot 13, in this way, during manufacturing and production, generation of new parts is saved.

Preferably, as shown in FIG. 2, the substrate is provided thereon with a connecting pole 14 penetrating the mobile plate. By disposing the connecting pole 14, the displacement of the mobile plate relative to movement of the substrate is more stable, to ensure that relative change with the water volume is more accurate.

Preferably, the elastic element 7 in the above scheme is a spring or an elastic washer.

Preferably, as shown in FIG. 1, the beverage dispenser further includes an alarm prompt device 15 connected with the water volume detection device 4, which is disposed on the dispenser body 1 and mainly includes a sounding device and a prompt device, used for prompting users a normal water volume state and a state of needing water of the beverage dispenser.

Through the present invention, the problem in the prior art that the water volume detection device of the beverage dispenser has a high cost and is easily affected by environments, which, on the one end, reduces the manufacturing cost of the water volume detection device in the beverage dispenser, and on the other hand, causes water volume detection not to be easily affected by environments and to be more stable and accurate.

Various specific embodiments described hereinabove and shown in the drawings are merely used for describing the present invention, but not all of the present invention. Within the category of the basic technical thought of the present invention, any forms of variations made by those of ordinary skill in the art for the present invention all fall within the protection scope of the present invention, which is defined by the appended claims.

## Claims

1. A beverage dispenser, comprising a dispenser body (1), a water tank (2), a control device (3) used for controlling the beverage dispenser to operate and a water volume detection device (4) disposed on the dispenser body (1), wherein the water volume detection device (4) comprises:
a substrate (5) located on the dispenser body;
a mobile plate (6) that supports the water tank;
an elastic element (7) disposed between the substrate (5) and the mobile plate (6);
a first contact member (8) disposed below the mobile plate (6); and
a second contact member (9) disposed above the substrate (5); wherein
the mobile plate (6) is disposed above the substrate (5) and moves up and down relative to the substrate (5) with changes of water levels in the water tank (2), and the first contact member (8) and the second contact member (9) constitute a switch of the control device (3), **characterized in that** a side face of the dispenser body (1) is provided thereon with at least one support device (10) connected with the water tank (2), wherein the support device (10) is provided thereon with a hole slot (13) matching the water tank (2) and the elastic element (7), and **in that** the water volume detection device (4) is disposed on one support device (10) therein.

2. The beverage dispenser according to claim 1, **characterized in that**, the water tank (2) is equipped with at least one hasp (12) that matches corresponding support device (10) and **in that** the hole slot (13) of the support device (10) receives the hasp (12) in order to firmly fix the water tank (2) on the side face of the dispenser body (1).

3. The beverage dispenser according to claim 1 or 2, **characterized in that**, when the first contact member (8) comes into contact with the second contact member (9), the control device (3) begins to operate; and when the first contact member (8) is detached from the second contact member (9), the control device (3) stops operating.

4. The beverage dispenser according to claim 3, **characterized in that**, the first contact member (8) is a conducting strip integrally formed with the mobile plate (6), and the second contact member (9) is a conductive element extending towards the direction of the mobile plate (6).

5. The beverage dispenser according to claim 4, **characterized in that**, the second contact member (9) is a cylindrical object or bendable sheet metal.

6. The beverage dispenser according to claim 3, **characterized in that**, the second contact member (9) is a conducting strip integrally formed with the substrate (5), and the first contact member (8) is a conductive element extending towards the direction of the substrate (5).

7. The beverage dispenser according to claim 4, **characterized in that**, the first contact member (8) is a cylindrical object or bendable sheet metal.

8. The beverage dispenser according to claim 1, **characterized in that**, the substrate (5) is provided thereon with a connecting pole (14) penetrating the mobile plate (6).

9. The beverage dispenser according to claim 1, **characterized in that**, the elastic element (7) is a spring or an elastic washer.

10. The beverage dispenser according to claim 1, **characterized by** comprising: an alarm prompt device (15) connected with the water volume detection device (4).

## Patentansprüche

1. Getränkeautomat mit einem Automatenhauptteil (1), einem Wassertank (2), einer zum Steuern des Betriebs des Getränkeautomaten benutzten Steuereinrichtung (3) und einer an dem Automatenhauptteil (1) angeordneten Wasservolumenerkennungsvorrichtung (4), die Folgendes umfasst:
ein Substrat (5), das sich an dem Automatenhauptteil befindet,
eine bewegliche Platte (6), die den Wassertank trägt,
ein elastisches Element (7), das zwischen dem Substrat (5) und der beweglichen Platte (6) angeordnet ist,
ein erstes Kontaktelement (8), das unter der beweglichen Platte (6) angeordnet ist, und
ein zweites Kontaktelement (9), das über dem Substrat (5) angeordnet ist, wobei die bewegliche Platte (6) über dem Substrat (5) angeordnet ist und sich in Bezug auf das Substrat (5) bei Veränderung des Wasserfüllstands im Wassertank (2) nach oben und unten bewegt und das erste Kontaktelement (8) und das zweite Kontaktelement (9) einen Schalter der Steuereinrichtung (3) bilden, **dadurch gekennzeichnet, dass** eine Seitenfläche des Automatenhauptteils (1) mit mindestens einer Haltevorrichtung (10) versehen ist, die mit dem Wassertank (2) verbunden ist, wobei die Haltevorrichtung (10) mit einem zum Wassertank (2) und zum elastischen Element (7) passenden Langloch (13) versehen ist, und dass die Wasservolumenerkennungsvorrichtung (4) an einer Haltevorrichtung (10) darin angeordnet ist.

2. Getränkeautomat nach Anspruch 1, **dadurch gekennzeichnet, dass** der Wassertank (2) mit mindestens einem Schließhaken (12) versehen ist, der zu der entsprechenden Haltevorrichtung (10) passt, und das Langloch (13) der Haltevorrichtung (10) den Schließhaken (12) aufnimmt, so dass der Wassertank (2) fest an der Seitenfläche des Automatenhauptteils (1) fixiert wird.

3. Getränkeautomat nach Anspruch 1 oder 2, **dadurch gekennzeichnet, dass** die Steuereinrichtung (3) zu arbeiten beginnt, wenn das erste Kontaktelement (8) mit dem zweiten Kontaktelement (9) in Kontakt kommt, und zu arbeiten aufhört, wenn das erste Kontaktelement (8) von dem zweiten Kontaktelement (9) getrennt wird.

4. Getränkeautomat nach Anspruch 3, **dadurch gekennzeichnet, dass** es sich bei dem ersten Kontaktelement (8) um einen in die bewegliche Platte (6) integrierten leitfähigen Streifen und bei dem zweiten Kontaktelement (9) um ein in Richtung der beweglichen Platte (6) verlaufendes leitfähiges Element handelt.

5. Getränkeautomat nach Anspruch 4, **dadurch gekennzeichnet, dass** es sich bei dem zweiten Kontaktelement (9) um einen zylinderförmigen Gegenstand oder um ein biegbares Blech handelt.

6. Getränkeautomat nach Anspruch 3, **dadurch gekennzeichnet, dass** es sich bei dem zweiten Kontaktelement (9) um einen in das Substrat (5) integrierten leitfähigen Streifen und bei dem ersten Kontaktelement (8) um ein in Richtung des Substrats (5) verlaufendes leitfähiges Element handelt.

7. Getränkeautomat nach Anspruch 4, **dadurch gekennzeichnet, dass** es sich bei dem ersten Kontaktelement (8) um einen zylinderförmigen Gegenstand oder um ein biegbares Blech handelt.

8. Getränkeautomat nach Anspruch 1, **dadurch gekennzeichnet, dass** das Substrat (5) mit einer Verbindungsstange (14) versehen ist, die durch die bewegliche Platte (6) verläuft.

9. Getränkeautomat nach Anspruch 1, **dadurch gekennzeichnet, dass** es sich bei dem elastischen Element (7) um eine Feder oder eine elastische Unterlegscheibe handelt.

10. Getränkeautomat nach Anspruch 1, **dadurch gekennzeichnet, dass** er Folgendes umfasst: eine Warnvorrichtung (15), die mit der Wasservolumenerkennungsvorrichtung (4) verbunden ist.

## Revendications

1. Distributeur de boissons, comprenant un corps de distributeur (1), un réservoir d'eau (2), un dispositif de commande (3) utilisé pour commander le fonctionnement du distributeur de boissons et un dispositif de détection de volume d'eau (4) disposé sur le corps de distributeur (1), dans lequel le dispositif de détection de volume d'eau (4) comprend :
un substrat (5) situé sur le corps de distributeur ;
une plaque mobile (6) qui porte le réservoir d'eau ;
un élément élastique (7) disposé entre le substrat (5) et la plaque mobile (6) ;
un premier organe de contact (8) disposé au-dessous de la plaque mobile (6) ; et
un second organe de contact (9) disposé au-dessus du substrat (5) ; dans lequel la plaque mobile (6) est disposée au-dessus du substrat (5) et se déplace vers le haut et
vers le bas par rapport au substrat (5) avec des variations de niveaux d'eau dans le réservoir d'eau (2), et le premier organe de contact (8) et le second organe de contact (9) constituent un commutateur du dispositif de commande (3), **caractérisé en ce qu'**une face latérale du corps de distributeur (1) est munie sur celle-ci d'au moins un dispositif de support (10) relié au réservoir d'eau (2), dans lequel le dispositif de support (10) est muni sur celui-ci d'une fente trouée (13) concordant avec le réservoir d'eau (2) et l'élément élastique (7), et **en ce que** le dispositif de détection de volume d'eau (4) est disposé sur un dispositif de support (10) en son sein.

2. Distributeur de boissons selon la revendication 1, **caractérisé en ce que** le réservoir d'eau (2) est équipé d'au moins un moraillon (12) qui concorde avec le dispositif de support (10) correspondant et **en ce que** la fente trouée (13) du dispositif de support (10) reçoit le moraillon (12) afin de fixer fermement le réservoir d'eau (2) sur la face latérale du corps de distributeur (1).

3. Distributeur de boissons selon la revendication 1 ou 2, **caractérisé en ce que**, lorsque le premier organe de contact (8) vient en contact avec le second organe de contact (9), le dispositif de commande (3) commence à fonctionner ; et lorsque le premier organe de contact (8) est détaché du second organe de contact (9), le dispositif de commande (3) cesse de fonctionner.

4. Distributeur de boissons selon la revendication 3, **caractérisé en ce que** le premier organe de contact (8) est une bande conductrice formée de manière solidaire avec la plaque mobile (6), et le second organe de contact (9) est un élément conducteur s'étendant dans la direction de la plaque mobile (6).

5. Distributeur de boissons selon la revendication 4, **caractérisé en ce que** le second organe de contact (9) est un objet cylindrique ou une tôle métallique apte à être cintrée.

6. Distributeur de boissons selon la revendication 3, **caractérisé en ce que** le second organe de contact (9) est une bande conductrice formée de manière solidaire avec le substrat (5), et le premier organe de contact (8) est un élément conducteur s'étendant dans la direction du substrat (5).

7. Distributeur de boissons selon la revendication 4, **caractérisé en ce que** le premier organe de contact (8) est un objet cylindrique ou une tôle métallique apte à être cintrée.

8. Distributeur de boissons selon la revendication 1, **caractérisé en ce que** le substrat (5) est muni sur celui-ci d'une barre de connexion (14) pénétrant dans la plaque mobile (6).

9. Distributeur de boissons selon la revendication 1, **caractérisé en ce que** l'élément élastique (7) est un ressort ou une rondelle élastique.

10. Distributeur de boissons selon la revendication 1, **caractérisé par le fait qu'**il comprend : un dispositif d'incitation et d'alarme (15) connecté au dispositif de détection de volume d'eau (4).
